# EUROPÄISCHE PATENTSCHRIFT

(11) **EP 2 834 804 B1**
(45) Veröffentlichungstag und Bekanntmachung des Hinweises auf die Patenterteilung: **23.08.2017**
(21) Anmeldenummer: 13719272.0
(22) Anmeldetag: 02.04.2013
(51) Int. Cl.: B64D 25/00, G09F 13/20, G09F 19/22

(54) **FLUCHTWEGMARKIERUNG MIT EINEM LEUCHTSTREIFEN AUS PHOTOLUMINESZENTEM MATERIAL**
ESCAPE ROUTE MARKING WITH A LUMINOUS STRIP MADE OF PHOTOLUMINESCENT MATERIAL
DISPOSITIF DE MARQUAGE DE VOIE DE SECOURS COMPRENANT UNE BANDE LUMINEUSE FAITE D'UN MATÉRIAU PHOTOLUMINESCENT

(30) Priorität: 05.04.2012 DE 102012006902
(43) Veröffentlichungstag der Anmeldung: 11.02.2015
(73) Patentinhaber: Lufthansa Technik AG, 22335 Hamburg (DE)
(72) Erfinder: BIEHL, Torben, 22081 Hamburg (DE); LIEROW, Hans-Christian, 22339 Hamburg (DE)
(74) Vertreter: Hauck Patentanwaltspartnerschaft mbB
(86) Internationale Anmeldenummer: PCT/EP2013/000968
(87) Internationale Veröffentlichungsnummer: WO 2013/149719

(56) Entgegenhaltungen:
- WO-A1-2009/106342
- DE-A1-102009 040 042
- DE-T2- 69 603 186
- DE-U1- 29 624 636
- GB-A- 2 448 424
- US-A- 5 499 170

## Beschreibung

Die vorliegende Erfindung betrifft eine Fluchtwegmarkierung mit einem länglichen Leuchtstreifen aus photolumineszentem Material, das im Dunklen nachleuchtet. Derartige Fluchtwegmarkierungen werden insbesondere in Flugzeugen eingesetzt, um den Passagieren im Dunklen den Fluchtweg anzuzeigen.

Aus GB 24 48 424 A ist eine photolumineszente Fluchtwegmarkierung bekannt, die einen länglichen Leuchtstreifen aus einem photolumineszenten Material aufweist. Der Leuchtstreifen ist mit seinem Gehäuse in einer Halteschiene eingesetzt, die eine nach oben offene Aufnahmevertiefung für den Leuchtstreifen aufweist. Seitlich besitzt die Halteschiene eine maulförmige Aufnahme für einen an die Fluchtwegmarkierung angrenzenden Bodenbelag. Die maulförmige Aufnahme wird nach oben durch seitlich von der Halteschiene abstehende Abdeckflügel und nach unten durch seitlich abstehende Auflagestege begrenzt. In der Aufnahmevertiefung der Halteschiene ist im Übergang zwischen dem Grund der Aufnahmevertiefung und deren Seitenwand die Wandstärke der Halteschiene geringer ausgebildet, so dass die Seitenwand der Halteschiene mit dem daran befestigten Abdeckflügel elastisch ist, um die Öffnungsweite der maulförmigen Aufnahme an die Dicke des Bodenbelages anzupassen. Nachteilig an der bekannten Fluchtwegmarkierung ist, dass nur in einem sehr begrenzten Bereich die unterschiedliche Dicke von Bodenbelägen ausgeglichen werden kann.

Aus US 5,499,170 ist ein Beleuchtungssystem bekannt, bei dem eine harte Abdeckschiene ein Beleuchtungssystem abdeckt, das in einer weichen Aufnahme angeordnet ist. Die weiche Aufnahme besitzt seitlich abstehende Flügel. Aufnahme und Abdeckschiene sind in einem U-förmigen Metallprofil angeordnet, das am Fußboden verschraubt ist.

Aus DE 696 03 1986 T2 ist eine Notbeleuchtungseinheit bekannt, die eine Abdeckung mit seitlich abstehenden Flügeln besitzt, die rastend an einer Bodenschiene befestigt ist.

Aus DE 296 24 636 U1 ist eine nachleuchtende Signalfläche bekannt, die mit einem einseitig offenen Aufnahmeprofil ausgebildet ist, in dessen Ausnehmung ein Streifen aus einem nachleuchtenden Material eingebracht ist, der zur offenen Seite des Aufnahmeprofils mit einer begehbaren Schutzschicht abgedeckt ist.

Aus WO 2009/103342 A2 ist eine Fluchtwegmarkierung für ein Flugzeug sowie ein Verfahren zur Herstellung einer Fluchtwegmarkierung bekannt, bei der ein photolumineszentes, auf Silikon basierendes Trägermaterial eingesetzt wird.

Der Erfindung liegt die Aufgabe zugrunde, eine Fluchtwegmarkierung bereitzustellen, die mit einfachen Mitteln bei Bodenbelägen unterschiedlichster Höhe eingesetzt werden kann.

Die Aufgabe wird durch eine Fluchtwegmarkierung mit den Merkmalen aus Anspruch 1 gelöst. Vorteilhafte Ausgestaltungen bilden die Gegenstände der Unteransprüche.

Die erfindungsgemäße Fluchtwegmarkierung besitzt einen länglichen Leuchtstreifen aus photolumineszentem Material, das im Dunklen nachleuchtet. Durch Lichteinfall wird das photolumineszente Material aufgeladen und leuchtet im Dunklen, um einen Fluchtweg in dem Flugzeug anzuzeigen. Der Leuchtstreifen ist in einem Gehäuse angeordnet, das mindestens auf seiner Oberseite für ein von dem photolumineszenten Material des Leuchtstreifens abgestrahltes Spektrum durchscheinend oder transparent ausgebildet ist, so dass mit dem bloßen Auge das Nachleuchten des photolumineszenten Materials in dem Gehäuse gut sichtbar ist. Das Gehäuse mit dem Leuchtstreifen ist in eine Halteschiene für das Gehäuse eingesetzt. Die Halteschiene besitzt eine Aufnahmevertiefung für das Gehäuse des Leuchtstreifens und besitzt ferner auf beiden Seite der Halteschiene in Längsrichtung seitlich abstehende Abdeckflügel. Die Abdeckflügel stehen, bezogen auf die Längsrichtung, seitlich von der Halteschiene ab und definieren mit ihren freien Enden die Breite der Halteschiene quer zur Längsrichtung. Die Aufnahmevertiefung in der Halteschiene für das Gehäuse mit dem Leuchtstreifen ist an seiner Oberseite offen. so dass das eingesetzte Gehäuse mit seiner durchscheinenden Oberseite in dieser freiliegt. Erfindungsgemäß sind die Abdeckflügel elastisch ausgebildet, wobei mindestens die Abdeckflügel der Halteschiene aus einem Material bestehen, das elastischer als das Material des Gehäuses ist. Die erfindungsgemäße Verwendung eines elastischen Materials für die Abdeckflügel erlaubt es, einen Übergang an einem angrenzenden Bodenbelag herzustellen, wobei der angrenzende Bodenbelag unterhalb der Abdeckflügel angeordnet ist. Während beim Stand der Technik beispielsweise gemäß GB 24 48 424 regelmäßig das Problem auftritt, dass die Halteschiene durch eine Belastung ihrer Abdeckflügel bricht, können solche Probleme bei dem erfindungsgemäß elastisch ausgebildeten Abdeckflügeln nicht auftreten. Hinzu kommt, dass aufgrund der Elastizität der Abdeckflügel die Halteschiene bei Teppichen unterschiedlicher Dicke problemlos eingesetzt werden können. Auch ist es möglich, den angrenzenden Bodenbelag beispielsweise aus Kunststoffmaterial sicher an die Halteschiene anzuschließen, ohne dass Schwellen oder Hindernisse entstehen. Darüber hinaus bietet die erfindungsgemäße Halteschiene den Vorteil, dass sie nachträglich bei einem bereits vorhandenen Bodenbelag verlegt werden kann, da der angrenzende Bodenbelag lediglich von oben durch die Abdeckflügel abgedeckt ist. Erfindungsgemäß ist an der Fluchtwegmarkierung ein brandhemmendes Fillermaterial vorgesehen, das an der Unterseite der Halteschiene angeordnet ist und aus einem Schaummaterial besteht. Durch das geschäumte Fillermaterial kann die Höhe der Halteschiene ausgeglichen werden. Ferner erlaubt die Verwendung eines Schaummaterials eine Gewichtseinsparung von ungefähr 30% gegenüber einem Höhenausgleich aus Polycarbonat.

In einer bevorzugten Ausgestaltung ist die Halteschiene aus einem Material ausgebildet, das elastischer als das Material des Gehäuses ist. Da die Halteschiene im Wesentlichen aus der Aufnahmevertiefung und den Abdeckflügeln besteht, ist es nicht erforderlich, diese aus einem steifen oder harten Material auszubilden. Der Schutz des Leuchtstreifens vor von außen angreifenden Belastungen, wie beispielsweise Trittbelastungen oder Belastungen durch Rollwagen, wird von dem Gehäuse übernommen.

In einer bevorzugten Ausgestaltung sind die Abdeckflügel an der Oberseite der Halteschiene angeordnet und das freie Ende der Abdeckflügel weist um einen Winkel kleiner 90° zur Unterseite der Halteschiene. Die Anordnung der Abdeckflügel an der Oberseite der Halteschiene stellt sicher, dass keine störende Schwelle durch den Übergang von der Halteschiene mit der Aufnahmevertiefung zu den Seitenflügeln bebildet wird. Die leicht geneigte Anordnung der Abdeckflügel ermöglicht es, trotz des elastischen Materials für die Seitenflügel, einen ausreichenden Anpressdruck der Seitenflügel auf dem Bodenbelag bereit zu stellen.

In einer zweckmäßigen Weiterbildung besitzt mindestens einer der Abdeckflügel einen ersten, im Wesentlichen parallel zur Oberseite des in der Aufnahmevertiefung eingesetzten Gehäuses verlaufenden Abschnitt und einen zweiten, von der Oberseite fortweisend abgewinkelten Abschnitt. Hierdurch besitzt die Halteschiene eine Kontur im Querschnitt, die leicht von einem Rollwagen überwunden werden kann.

Um dem in die Aufnahmevertiefung eingesetzten Gehäuse einen besseren Halt in der Aufnahmevertiefung zu geben, besitzt die Aufnahmevertiefung einen trapezförmigen Querschnitt, der sich zur Oberfläche hin verjüngt. Bei der Verwendung eines elastischen Materials für die Halteschiene kann das Gehäuse mit dem Leuchtstreifen trotz der sich verjüngenden Breite der Aufnahmevertiefung problemlos in diese eingesetzt werden.

In einer zweckmäßigen Weiterbildung besitzt die Halteschiene auf ihrer Unterseite mindestens zwei sich in Längsrichtung der Halteschiene erstreckende vorstehende Stege. Die Stege stehen dabei nicht seitlich über die Halteschiene über, sondern sind ausschließlich auf der Unterseite der Halteschiene ausgebildet. Die Stege schließen bevorzugt an den Seiten der Halteschiene jeweils bündig mit der Seitenwand der Halteschiene ab. Durch die Stege auf der Unterseite wird ein definierter Bereich unter der Halteschiene geschaffen, der beispielsweise zum Verkleben der Halteschiene an einem Untergrund oder für einen Höhenausgleich genutzt werden kann.

Das Fillermaterial ist mit seiner Dicke bevorzugt derart dimensioniert, dass die freien Enden der Abdeckflügel eine Höhe aufweisen, bei der unter elastischer Verformung der Abdeckflügel diese auf einem angrenzenden Bodenbelag aufliegen. Durch eine Anpassung des Fillermaterials in seiner Dicke kann eine sichere Auflage der Abdeckflügel auf einem angrenzenden Bodenbelag erzielt werden. Bevorzugt wird dabei bei einem Bodenbelag mit einer größeren Dicke ein dickeres Fillermaterial eingesetzt als bei einem Bodenbelag mit geringerer Dicke, wobei das Fillermaterial zur klebenden Verbindung mit dem Untergrund vorgesehen ist. Durch unterschiedlich dickes Fillermaterial kann die Höhe der Fluchtwegmarkierung an unterschiedliche Höhen des Bodenbelags angepasst werden.

Bevorzugt ist die Halteschiene aus einem Kunststoffmaterial der Härte Shore A20 bis A90 hergestellt. Die Halteschiene bildet somit eine elastische Einlage für das Gehäuse des Leuchtstreifens. Dabei ist die Halteschiene bevorzugt einstückig durch Extrusion hergestellt.

Eine bevorzugte Ausgestaltung der erfindungsgemäßen Fluchtwegmarkierung wird nachfolgend an einem Beispiel näher erläutert. Es zeigt:
- Fig. 1: eine Querschnittansicht der erfindungsgemäßen Fluchtwegmarkierung in einer auseinandergezogenen Darstellung und
- Fig. 2: einen Querschnitt durch die Fluchtwegmarkierung.

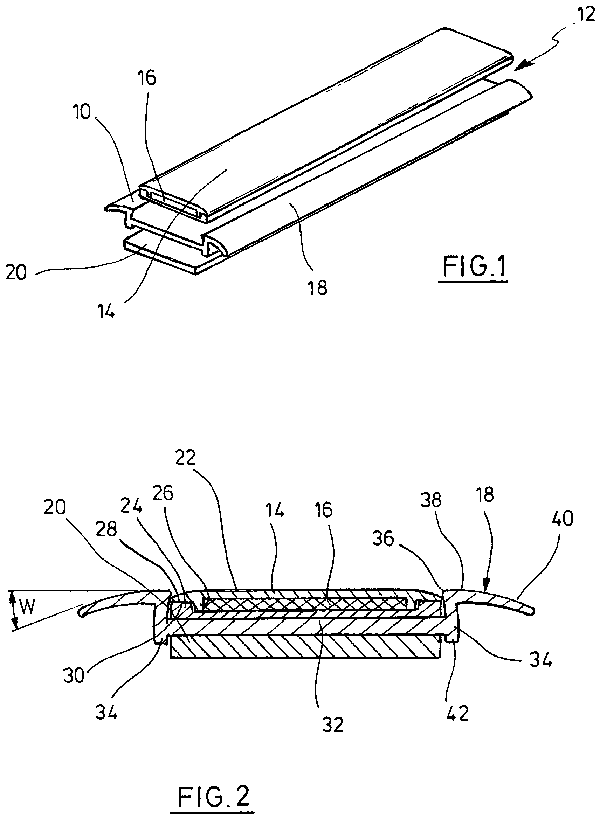

Fig. 1 zeigt eine Halteschiene 10, die eine Aufnahmevertiefung 12 aufweist. In die Aufnahmevertiefung 12 eingesetzt ist ein Gehäuse 14, in dem ein photolumineszenter Leuchtstreifen 16 angeordnet ist. Die Halteschiene 10 besitzt an der Seite abstehende Abdeckflügel 18 und ist an seiner Unterseite mit einem Fillermaterial 20 versehen. Fig. 1 zeigt einen Abschnitt der Fluchtwegmarkierung, wie er beispielsweise in einem Flugzeuginnenraum eingesetzt werden kann.

Das Gehäuse 14 ist, wie in Fig. 2 zu erkennen, zweiteilig aufgebaut und besitzt eine Oberschale 22 aus einem transparenten Material und eine Unterschale 24. Die Oberschale 22 besitzt auf ihrer zur Unterschale 24 weisenden Seite vorstehende Stege 26, die einen Aufnahmeraum für den Leuchtstreifen begrenzen. Außerhalb der Stege 26 besitzt die Oberschale einen Auflagerand 28, der auf einem korrespondierenden Auflagerand 30 der Unterschale aufliegt. Ober- und Unterschale sind aus einem Kunststoffmaterial (Polycarbonat) hergestellt. Das Gehäuse 14 umgibt den photolumineszenten Leuchtstreifen, der beispielsweise aus einem mit photolumineszenten Pigmenten angereicherten Kunststoffmaterial besteht, vollständig, so dass der Leuchtstreifen vor Umgebungseinflüssen, wie beispielsweise Feuchtigkeit und Flüssigkeiten, geschützt ist.

Das Gehäuse 14 kann in der Aufnahmevertiefung 12 mit der Halteschiene 10 verklebt sein, jedoch ist eine vollflächige Verklebung des Gehäuses in der Halteschiene nicht unbedingt erforderlich.

Wie in Fig. 2 zu erkennen, besitzt die Halteschiene einen Grund 32, an den sich Seitenwände 34 anschließen. Der Grund 32 und die Seitenwände 34 begrenzen die Aufnahmevertiefung 12 für das Gehäuse. Die Seitenwände 34 sind nach oben auf der zum Gehäuse 14 weisenden Seite des Grundes 32 leicht nach innen geneigt, so dass ein die Oberschale 22 des Gehäuses haltender Vorsprung 36 gebildet wird. Hierdurch erhält die Aufnahmevertiefung 12 im Querschnitt eine Trapezform. An der Oberseite der Seitenwände 34 steht seitlich jeweils ein Abdeckflügel 18 ab. Der Abdeckflügel 18 steht über die Seitenwand 34 hinaus und definiert so die Breite der Halteschiene 10. Der Abdeckflügel 18 besitzt einen ersten Bereich 38, der im Wesentlichen parallel zur Oberseite der Oberschale 22 verläuft und einen zweiten Bereich 40, der gegenüber dem ersten Bereich um einen Winkel W abgewinkelt ist. Auf seiner Unterseite besitzt die Halteschiene 10 seitliche Stege 42, die die Fortsetzung der Seitenwand bilden. Zwischen den Stegen 42 ist das Fillermaterial 20 angeordnet. Das Fillermaterial 20 besitzt als geschäumtes Material ein geringes Gewicht. Aufgrund seines geschäumten Aufbaus werden bei der Verwendung eines Elastomers oder eines thermoplastischen Elastomers Materialdichten für das Fillermaterial zwischen 30 kg/m³ und 70 kg/m³ erzielt. Das Fillermaterial besitzt einen möglichst geringen Druckverformungsrest von weniger als 20 %. Der Druckverformungsrest ist ein an sich bekanntes Maß dafür, wie sich Elastomere bei lang andauernder, konstanter Druckverformung und anschließender Entspannung verhalten. Das Fillermaterial 20 ist zudem bevorzugt elastisch verformbar, wobei hierfür sich der Einsatz des weichelastischen Schaumstoffes bzw. Kunststoffes, wie beispielsweise Polyethylen, eignet. Für die Verarbeitung in Flugzeugen besitzt das Fillermaterial bevorzugt eine Wasseraufnahmekapazität von weniger als 3 % und ist zudem flammhemmend ausgebildet.

Die Halteschiene 10 besteht aus einem Elastomer oder einem thermoplastischen Elastomer und bildet eine weiche Einlage für das Gehäuse des Leuchtstreifens. Die Halteschiene wird einstückig mit ihren Abdeckflügeln extrahiert. Das Material besitzt eine Shorehärte von A20 bis A90, bevorzugt im Bereich von Shore A60 bis Shore A90. Die Halteschiene 10 kann eine an den angrenzenden Bodenbelag angepasste Farbe besitzen. Auch ist es möglich, die Halteschiene transparent, transluzent oder lichtundurchlässig herzustellen. Das Gehäuse für den Leuchtstreifen 16 besteht aus einem harten Kunststoff mit einer Shore-Härte vom Typ A von über 90, bevorzugt von über A100. Als Material für das Gehäuse ist insbesondere Polycarbonat mit der entsprechenden Shore-A-Härte besonders geeignet.

Bei dem Einsatz der erfindungsgemäßen Fluchtwegmarkierung ist insbesondere zwischen dem Einsatz im Küchenbereich mit einem nicht textilen Bodenbelag (non textile flooring (NTF)) und einem Teppichbelag im Gangbereich zu unterscheiden. Beide Bodenbeläge besitzen eine unterschiedliche Höhe, wobei der im Küchenbereich verwendete NTF-Bodenbelag standardmäßig eine Höhe von 2,5 mm aufweist. Die Halteschiene 10 ist mit ihren Abdeckflügeln 18 für den NTF-Bodenbelag ausgelegt. Wird sie im Gangbereich mit Teppichboden eingesetzt, wird ein Fillermaterial 20 eingesetzt, das die Halteschiene 10 entsprechend weit anhebt, so dass die Abdeckflügel mit einem ausreichenden Druck auf dem Teppichbelag aufliegen, wobei die Abdeckflügel dabei elastisch verformt sind.

## Patentansprüche

1. Fluchtwegmarkierung für ein Flugzeug mit
einem länglichen Leuchtstreifen (16) aus einem photolumineszenten Material,
einem Gehäuse (14), in dem der Leuchtstreifen (16) angeordnet ist und das mindestens auf seiner Oberseite (22) durchscheinend oder transparent ausgebildet ist, und
einer Halteschiene (10) für das Gehäuse (14), die eine Aufnahmevertiefung (12) für das Gehäuse (14) des Leuchtstreifens (16) und auf beiden Seiten der Halteschiene (10) in Längsrichtung seitlich abstehende Abdeckflügel (18) besitzt, wobei das in die Aufnahmevertiefung (12) eingesetzte Gehäuse (14) mit einer Oberseite freiliegt, wobei die Abdeckflügel (18) elastisch ausgebildet sind, **dadurch gekennzeichnet, dass** mindestens die Abdeckflügel (18) der Halteschiene (10) aus einem Material bestehen, das elastischer als das Material des Gehäuses (14) ist, und ein flammhemmendes Fillermaterial (20) vorgesehen ist, das an der Unterseite der Halteschiene angeordnet ist und aus einem Schaummaterial besteht, für das ein Elastomer oder ein thermoplastisches Elastomer mit einer Materialdichte von 30kg/m³ bis 70 kg/m³ verwendet wird.

2. Fluchtwegmarkierung nach Anspruch 1, **dadurch gekennzeichnet, dass** die gesamte Halteschiene (10) aus einem Material besteht, das elastischer als das Material des Gehäuses (14) ist.

3. Fluchtwegmarkierung nach Anspruch 1 oder 2, **dadurch gekennzeichnet, dass** die Abdeckflügel (18) an der Oberseite der Halteschiene (10) angeordnet sind und das freie Ende der Abdeckflügel (18) um einen Winkel zur Unterseite der Halteschiene (10) geneigt ist.

4. Fluchtwegmarkierung nach einem der vorausgehenden Ansprüche, **dadurch gekennzeichnet, dass** mindestens ein Abdeckflügel (18) einen ersten im Wesentlichen parallel zur Oberseite des in die Aufnahmevertiefung (12) eingesetzten Gehäuses (14) verlaufenden Abschnitt und einen zweiten von der Oberseite fort abgewinkelten Abschnitt (40) aufweist.

5. Fluchtwegmarkierung nach einem der vorangegangenen Ansprüche, **dadurch gekennzeichnet, dass** die Aufnahmevertiefung einen trapezförmigen Querschnitt besitzt, der sich zu seiner Oberseite hin verjüngt.

6. Fluchtwegmarkierung nach einem der vorangegangenen Ansprüche, **dadurch gekennzeichnet, dass** die Halteschiene (10) auf ihrer Unterseite mindestens zwei sich in Längsrichtung erstreckende, vorstehende Stege (42) besitzt.

7. Fluchtwegmarkierung nach Anspruch 6, **dadurch gekennzeichnet, dass** die Stege (42) an der Seite der Halteschiene (10) jeweils bündig mit einer Seitenwand der Halteschiene (10) abschließen.

8. Fluchtwegmarkierung nach einem der Ansprüche 1 bis 7, **dadurch gekennzeichnet, dass** das Fillermaterial innerhalb der Stege auf einer Unterseite der Halteschiene (10) angeordnet ist.

9. Fluchtwegmarkierung nach einem der vorangegangenen Ansprüche, **dadurch gekennzeichnet, dass** das Fillermaterial (20) in seiner Dicke d derart dimensioniert ist, dass die freien Enden der Abdeckflügel (18) eine Höhe aufweisen, bei der unter elastischer Verformung des Abdeckflügels (18) diese auf einem angrenzenden Bodenbelag aufliegen.

10. Fluchtwegmarkierung nach einem der vorangegangenen Ansprüche, **dadurch gekennzeichnet, dass** die Höhe der Fluchtwegmarkierung durch unterschiedlich dickes Fillermaterial (20) an unterschiedliche Bodenbelagshöhen anpassbar ist.

11. Fluchtwegmarkierung nach einem der vorangegangenen Ansprüche, **dadurch gekennzeichnet, dass** die Halteschiene aus einem Kunststoffmaterial der Härte Shore A20 bis A90 besteht.

## Claims

1. An escape route marking for an aeroplane, with
an elongate light strip (16) of a photoluminescent material,
a casing (14), in which the light strip (16) is arranged and which is made to be translucent or transparent at least on its upper side (22), and
a holding rail (10) for the casing (14), which has an receptacle depression (12) for the casing (12) of the light strip (16) and cover flaps (18), laterally projecting in the longitudinal direction on both sides of the holding rail (10), wherein the casing (14) inserted into the receptacle depression (12) is exposed with a top side,
wherein the cover flaps (18) are made elastic, **characterised in that** at least the cover flaps (18) of the holding rail (10) consist of a material, which is more elastic than the material of the casing (14), and that a flame-retarding filler material (20) is provided, which is arranged at the bottom side of the holding rail and consists of a foam material for which an elastomer or a thermoplastic elastomer with a material density of 30kg/m³ to 70 kg/m³ is used.

2. The escape route marking according to claim 1, **characterised in that** the entire holding rail (10) consists of a material which is more elastic than the material of the casing (14).

3. An escape route marking according to claim 1 or 2, **characterised in that** the cover flaps (18) are arranged on the top side of the holding rail (10) and the free end of the cover flaps (18) is inclined by an angle with respect to the bottom side of the holding rail (10).

4. An escape route marking according to one of the preceding claims, **characterised in that** at least one cover flap (18) has a first portion, which extends essentially in parallel to the top side of the casing (14) that is inserted into the receptacle depression (12), and a second portion (40) angled away from the top side.

5. An escape route marking according to one of the preceding claims, **characterised in that** the receptacle depression has a trapezoid cross section which tapers towards its top side.

6. An escape route marking according to one of the preceding claims, **characterised in that** on its bottom side, the holding rail (10) has at least two projecting webs (42) extending in the longitudinal direction.

7. The escape route marking according to claim 6, **characterised in that** at the side of the holding rail (10), each of the webs (42) terminates flush with a side wall of the holding rail (10).

8. An escape route marking according to any one of claims 1 to 7, **characterised in that** the filler material is arranged inside the webs on a bottom side of the holding rail (10).

9. An escape route marking according to one of the preceding claims, **characterised in that** the filler material (20) is dimensioned in its thickness d such that the free ends of the cover flaps (18) have such a height that they rest on an adjacent flooring under elastic deformation of the cover flap (18).

10. An escape route marking according to one of the preceding claims, **characterised in that** the height of the escape route marking can be adapted to different flooring heights by filler material (20) with different thicknesses.

11. An escape route marking according to one of the preceding claims, **characterised in that** the holding rail consists of a plastic material with Shore A hardness of A20 to A90.

## Revendications

1. Dispositif de marquage de voie de secours pour un avion, avec
une bande lumineuse (16) oblongue d'un matériau photoluminescent,
un boîtier (14), dans lequel la bande lumineuse (16) est arrangée et qui est fait translucide ou transparent au moins sur son coté supérieur (22), et
un rail de maintien (10) pour le boîtier (14), qui a une cavité de logement (12) pour le boîtier (12) de la bande lumineuse (16) et des ailes de recouvrement (18), faisant latéralement saillie dans la direction longitudinale sur les deux cotés du rail de maintien (10), le boîtier (14) inséré dans la cavité de logement (12) étant exposé avec un coté supérieur,
les ailes de recouvrement (18) étant faites de façon élastique, **caractérisé en ce qu'**au moins les ailes de recouvrement (18) du rail de maintien (10) consistent d'un matériau qui est plus élastique que le matériau du boîtier (14), et qu'un matériau de remplissage (20) ignifuge est prévu qui est arrangé sur le coté inférieur du rail de maintien et consiste d'un matériau en mousse pour lequel un élastomère ou un élastomère thermoplastique avec une densité du matériau de 30kg/m³ à 70 kg/m³ est utilisé.

2. Dispositif de marquage de voie de secours selon la revendication 1, **caractérisé en ce que** le rail de maintien (10) entier consiste d'un matériau qui est plus élastique que le matériau du boîtier (14).

3. Dispositif de marquage de voie de secours selon la revendication 1 ou 2, **caractérisé en ce que** les ailes de recouvrement (18) sont arrangées sur le coté supérieur du rail de maintien (10) et que l'extrémité libre des ailes de recouvrement (18) est inclinée d'un angle par rapport au coté inférieur du rail de maintien (10).

4. Dispositif de marquage de voie de secours selon l'une quelconque des revendications précédentes, **caractérisé en ce qu'**au moins une aile de recouvrement (18) a une partie première, qui s'étend essentiellement en parallèle au coté supérieur du boîtier (14) inséré dans la cavité de logement (12), et une deuxième partie (40) repliée suivant un angle vers le dehors du coté supérieur.

5. Dispositif de marquage de voie de secours selon l'une quelconque des revendications précédentes, **caractérisé en ce que** la cavité de logement a une coupe transversale trapézoïdale qui s'effile vers son coté supérieur.

6. Dispositif de marquage de voie de secours selon l'une quelconque des revendications précédentes, **caractérisé en ce que** sur son coté inférieur, le rail de maintien (10) a au moins deux entretoises (42) faisant saillie et qui s'étendent dans la direction longitudinale.

7. Dispositif de marquage de voie de secours selon la revendication 6, **caractérisé en ce qu'**au coté du rail de maintien (10), chacune des entretoises (42) se ferme en affleurant avec une paroi latérale du rail de maintien (10).

8. Dispositif de marquage de voie de secours selon une des revendications 1 à 7, **caractérisé en ce que** le matériau de remplissage est arrangé dans l'intérieur des entretoises sur un coté inférieur du rail de maintien (10).

9. Dispositif de marquage de voie de secours selon l'une quelconque des revendications précédentes, **caractérisé en ce que** le matériau de remplissage (20) est dimensionné en son épaisseur d tellement que les extrémités libres des ailes de recouvrement (18) ont une telle hauteur qu'elles reposent sur un revêtement de sol adjacent avec déformation élastique de l'aile de recouvrement (18).

10. Dispositif de marquage de voie de secours selon l'une quelconque des revendications précédentes, **caractérisé en ce que** la hauteur du dispositif de marquage de voie de secours peut être adaptée à des hauteurs différentes du revêtement de sol par du matériau de remplissage (20) avec épaisseurs différentes.

11. Dispositif de marquage de voie de secours selon l'une quelconque des revendications précédentes, **caractérisé en ce que** le rail de maintien consiste d'une matière plastique de dureté Shore A20 à A90.
